(19) Europäisches Patentamt
European Patent Office
Office européen des brevets

(11) **EP 4 321 591 A1**

(12) **DEMANDE DE BREVET EUROPEEN**

(43) Date de publication:
**14.02.2024   Bulletin 2024/07**

(21) Numéro de dépôt: **23190872.4**

(22) Date de dépôt: **10.08.2023**

(51) Classification Internationale des Brevets (IPC):
**C09K 5/04** *(2006.01)*

(52) Classification Coopérative des Brevets (CPC):
**C09K 5/045;** C09K 2205/106; C09K 2205/126

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **11.08.2022   FR 2208255**

(71) Demandeur: DPKL
**82400 Saint Paul d'Espis (FR)**

(72) Inventeurs:
• **DUPARC, Benoit**
**82400 SAINT-PAUL-D'ESPIS (FR)**
• **AUGEARD, Bertrand**
**82290 MONTBETON (FR)**
• **DESPIERRES, Christophe**
**59840 PERENCHIES (FR)**
• **VIDOT, Kévin**
**31200 TOULOUSE (FR)**

(74) Mandataire: **Cabinet Didier Martin et al
Les Terrasses des Bruyères - Bâtiment C
314 C, Allée des Noisetiers
69760 Limonest (FR)**

(54) **FLUIDE REFRIGERANT, UTILISATION D'UN TEL FLUIDE, INSTALLATION FRIGORIFIQUE ET PROCEDE DE REFRIGERATION ASSOCIES**

(57)      - Fluide réfrigérant, utilisation d'un tel fluide, installation frigorifique et procédé de réfrigération associés.
- L'invention concerne un fluide réfrigérant du 1,3,3,3-tétrafluoroprop-1-ène et du $CO_2$ formant un mélange binaire, et d'autre part des nanoparticules d'oxyde de cuivre dispersées au sein dudit mélange binaire.
- L'invention est particulièrement adaptée au refroidissement d'une enceinte réfrigérée ou d'un fluide à refroidir.

**FIG 1**

EP 4 321 591 A1

**Description**

La présente invention concerne le domaine technique général des fluides réfrigérants, en particulier ceux mis en oeuvre au sein d'installations frigorifiques pour refroidir un espace clos tel qu'une chambre froide, ou encore un fluide à refroidir tel que de l'eau.

La présente invention se rapporte plus particulièrement à un fluide réfrigérant comprenant du 1,3,3,3-tétrafluoroprop-1-ène.

La présente invention concerne aussi une utilisation d'un fluide réfrigérant tel que susmentionné.

La présente invention concerne également une installation frigorifique mettant en oeuvre un fluide réfrigérant tel que susmentionné.

La présente invention concerne en outre un procédé de réfrigération mettant en oeuvre un fluide réfrigérant tel que susmentionné.

La présente invention concerne en outre un procédé d'adaptation d'une pompe à chaleur impliquant la mise en oeuvre un fluide réfrigérant tel que susmentionné.

Les fluides réfrigérants sont utilisés dans diverses applications nécessitant des échanges de chaleur, et plus particulièrement dans les pompes à chaleur permettant le refroidissement d'un espace, de préférence clos, tel qu'une pièce d'un bâtiment, une chambre froide, etc. Les fluides réfrigérants doivent bien évidemment être efficaces, c'est-à-dire remplir globalement leur fonction au sein des pompes à chaleur. Ils doivent en particulier présenter des performances énergétiques satisfaisantes permettant d'une part d'obtenir un bon refroidissement, et d'autre part de ne nécessiter qu'une dépense énergétique réduite. Il est en outre généralement exigé qu'ils soient le moins dangereux et le moins polluants possible, c'est-à-dire qu'ils présentent notamment un faible impact sur la couche d'ozone (notamment en remplacement des HFC - hydrofluorocarbures) et sur l'effet de serre, une faible toxicité, un caractère inflammable réduit, et une grande stabilité chimique.

La nécessité d'efficacité énergétique et la condition de non-dangerosité (pour l'homme ou l'environnement) ont longtemps représenté des exigences difficilement compatibles.

Néanmoins, les fluides dits « *HFO* », formés d'hydrofluoro-oléfines, ont permis dans une certaine mesure de répondre à la double exigence précitée. Les HFO sont des fluides réfrigérants (ou frigorigènes) dits « *de quatrième génération* » qui permettent d'obtenir des résultats particulièrement intéressants tant du point de vue de l'efficacité énergétique que de l'innocuité pour l'environnement et l'homme. Parmi les HFO, le 1,3,3,3-tétrafluoroprop-1-ène présente d'excellentes performances en termes d'échange de chaleur et une très faible toxicité. En particulier, son Potentiel de Réchauffement Planétaire, ou PRP (voir notamment le règlement 517/2014 de l'Union Européenne), est particulièrement faible. De plus, le 1,3,3,3-tétrafluoroprop-1-ène n'est pas inflammable à température et pression ambiantes.

L'usage du 1,3,3,3-tétrafluoroprop-1-ène en tant que fluide réfrigérant présente malgré tout certains inconvénients. En effet, ce fluide réfrigérant atteint certaines limites, notamment lorsque l'on souhaite l'utiliser pour des installations frigorifiques présentant des températures cibles de chambre froide aux alentours de 0°C et en-dessous. Pour ces températures cibles, et en fonction de la température extérieure, la pression d'évaporation du fluide réfrigérant formé de 1,3,3,3-tétrafluoroprop-1-ène est très basse, ce qui peut fréquemment mettre en arrêt de sécurité les équipements du circuit frigorifique de ladite installation, en particulier les compresseurs dudit circuit. En effet, lesdits compresseurs ne doivent pas fonctionner à une pression absolue très faible, proche de zéro bar, pour éviter toute dégradation mécanique. Un problème similaire est également constaté au sein des refroidisseurs de liquide dudit circuit, dans lesquels la pression maximale de fonctionnement est généralement située aux alentours de 0,2 bar. Ces mises en arrêt fréquentes obligent à réaliser de fréquents redémarrages, ce qui est particulièrement coûteux en énergie, et entraînent un refroidissement qui peut être plus lent et/ou moins efficace que désiré. Enfin, bien que le 1,3,3,3-tétrafluoroprop-1-ène présente des performances énergétiques plutôt bonnes en termes d'échange thermique, celles-ci restent limitées dans un certain nombre d'applications, et le composé 1,3,3,3-tétrafluoroprop-1-ène risque ainsi à la fois d'être obsolète à moyen terme, tout en étant difficile à remplacer ou améliorer du fait de son excellent compromis entre faible toxicité et bonne capacité d'échange thermique.

En définitive, l'usage de 1,3,3,3-tétrafluoroprop-1-ène comme fluide réfrigérant n'est pas complètement satisfaisant, puisque malgré les qualités intrinsèques de ce composé en termes de performances énergétiques et de faible pollution, il entraîne des mises hors services fréquentes des installations frigorifiques qui l'utilisent, ce qui provoque des perturbations dans le cycle de refroidissement, une perte énergétique considérable, et une usure prématurée de certains éléments des installations frigorifiques.

Les objets assignés à l'invention visent par conséquent à remédier aux différents inconvénients susmentionnés et à proposer un nouveau fluide réfrigérant qui puisse être mis en oeuvre sans provoquer d'arrêts intempestifs, et en particulier des arrêts de sécurité, d'une installation frigorifique, ou tout du moins qui puisse limiter significativement le nombre de ces arrêts.

Un autre objet assigné à l'invention vise à proposer un nouveau fluide réfrigérant présentant d'excellentes performances énergétiques.

Un autre objet assigné à l'invention vise à proposer un nouveau fluide réfrigérant présentant une grande sécurité d'utilisation.

Un autre objet assigné à l'invention vise à proposer un nouveau fluide réfrigérant dont la mise en oeuvre dans un cycle thermodynamique est facile et sans danger en particulier pour l'environnement et les personnes.

Un autre objet assigné à l'invention vise à proposer un nouveau fluide réfrigérant permettant d'obtenir un refroidissement efficace à de plages relativement larges de températures cibles, notamment des températures cibles aux alentours de 0°C, par exemple entre -15 et 15°C, ou entre -10 et 15°C, ou encore entre -5 et 1°C.

Un autre objet assigné à l'invention vise à proposer un nouveau fluide réfrigérant dont le coût de production est maîtrisé.

Un autre objet assigné à l'invention vise à proposer un nouveau fluide réfrigérant dont la production est facile et rapide.

Un autre objet assigné à l'invention vise à proposer un nouveau fluide réfrigérant qui peut être utilisé dans une large variété d'installations frigorifiques tout en procurant des performances élevées.

Un autre objet assigné à l'invention vise à proposer un nouveau fluide réfrigérant qui est peu polluant, peu toxique, et présente un impact très faible sur le réchauffement planétaire.

Un autre objet assigné à l'invention vise à proposer un nouveau fluide réfrigérant qui ne présente pas de problème d'incompatibilité et d'interaction complexe avec les installations frigorifiques le mettant en oeuvre comme fluide de travail.

Un autre objet assigné à l'invention vise à proposer un nouvelle utilisation d'un fluide réfrigérant permettant de réduire voire de supprimer les arrêts indésirables d'une installation frigorifique.

Un autre objet assigné à l'invention vise à proposer une nouvelle installation frigorifique fluide réfrigérant dont la conception lui permet de présenter très peu voire aucun arrêt indésirable.

Un autre objet assigné à l'invention vise à proposer un nouveau procédé de réfrigération dont la mise en oeuvre est particulièrement économe en temps, en énergie et permet de manière avantageuse un refroidissement à une température cible voulue.

Un autre objet assigné à l'invention vise à proposer un procédé d'adaptation d'une pompe à chaleur permettant d'améliorer les performances énergétiques générales et le fonctionnement de cette dernière.

Les objets assignés à l'invention sont atteints d'un fluide réfrigérant comprenant d'une part du 1,3,3,3-tétrafluoroprop-1-ène et du $CO_2$ formant un mélange binaire, et d'autre part des nanoparticules métalliques dispersées au sein dudit mélange binaire.

Les objets assignés à l'invention sont également atteints à l'aide d'une utilisation du fluide réfrigérant selon l'invention décrit ci-avant, pour transférer de l'énergie thermique, par changement d'état liquide/gaz dudit fluide réfrigérant, depuis un élément à refroidir, par exemple une enceinte réfrigérée ou un fluide à refroidir, jusqu'à un milieu distinct et distant dudit élément à refroidir.

Les objets assignés à l'invention sont en outre atteints à l'aide d'une installation frigorifique comprenant au moins :

- une pompe à chaleur,

- un élément à refroidir, par exemple une enceinte réfrigérée ou un fluide à refroidir, et

- un fluide réfrigérant selon l'invention conforme à la description ci-avant,

dans laquelle ladite pompe à chaleur est conçue pour mettre en oeuvre ledit fluide réfrigérant afin de refroidir ledit élément à refroidir jusqu'à une température cible.

Les objets assignés à l'invention sont en outre atteints à l'aide d'un procédé d'adaptation d'une pompe à chaleur utilisant initialement, comme fluide de travail, un fluide frigorigène différent du fluide réfrigérant selon l'invention décrit ci-avant, en particulier un fluide frigorigène formé à plus de 99% en proportion massique de 1,3,3,3-tétrafluoroprop-1-ène, ledit procédé comprenant au moins :

- une étape d'extraction du fluide frigorigène hors de ladite pompe à chaleur,

- une étape d'introduction, au sein de ladite pompe à chaleur, du fluide réfrigérant selon l'invention conforme à la description ci-avant comme fluide de travail pour ladite pompe à chaleur.

Les objets assignés à l'invention sont également atteints à l'aide d'un procédé de réfrigération comprenant successivement et cycliquement :

- une étape de compression, lors de laquelle un fluide réfrigérant à l'état vapeur est comprimé et voit sa pression et sa température augmenter, ledit fluide réfrigérant comprenant avantageusement, en proportions massiques, entre 95 et 99% de 1,3,3,3-tétrafluoroprop-1-ène, et du $CO_2$ en proportion massique strictement supérieure à 1% et strictement inférieure à 5%,

- une étape de condensation, lors de laquelle ledit fluide réfrigérant perd de la chaleur et ainsi passe à l'état liquide sous pression,

- une étape de détente, lors de laquelle ledit fluide réfrigérant subit une baisse de pression et en conséquence une vaporisation partielle,

- une étape d'évaporation, lors de laquelle ledit fluide réfrigérant partiellement vaporisé absorbe de la chaleur et en conséquence est totalement vaporisé,

ledit fluide réfrigérant étant, selon l'invention, conforme à la description ci-avant.

D'autres particularités et avantages de l'invention apparaîtront et ressortiront plus en détail à la lecture de la description faite ci-après, et en référence au dessin annexé donné uniquement à titre d'exemple illustratif et non limitatif, dans lequel :

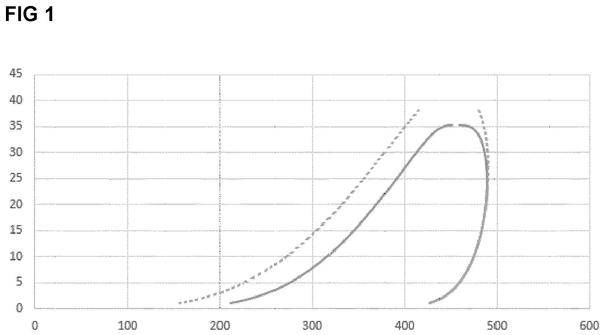

- la figure 1 illustre un diagramme pression-enthalpie superposé du TFP, en lignes continues, et du ZEO3 théorique, en lignes pointillées, l'abscisse représentant l'enthalpie en kJ/kg et l'ordonnée représentant la pression en bar.

L'invention concerne, selon un premier aspect, un fluide réfrigérant comprenant du 1,3,3,3-tétrafluoroprop-1-ène et du $CO_2$ formant un mélange binaire. Le fluide réfrigérant comprend donc du 1,3,3,3-tétrafluoroprop-1-ène (également appelé R1234ze), et est même avantageusement formé, en proportion massique, à plus de 90% par ce dernier. Préférentiellement, ledit 1,3,3,3-tétrafluoroprop-1-ène est du trans-1,3,3,3-tétrafluoroprop-1-ène (ou R1234ze(E)), plutôt que du cis-1,3,3,3-tétrafluoroprop-1-ène (ou R1234ze(Z)). Ledit fluide réfrigérant est avantageusement conçu pour être mis en oeuvre au sein d'une pompe à chaleur, laquelle est préférentiellement conçue pour refroidir un élément à refroidir. Ledit élément à refroidir comprend avantageusement une enceinte réfrigérée (et plus précisément l'espace intérieur de ladite enceinte) et/ou un fluide à refroidir. L'enceinte réfrigérée est par exemple une chambre froide, un local commercial, un entrepôt de stockage, voire une pièce climatisée. Le fluide à refroidir peut par exemple être de l'eau, de l'eau glycolée, une huile, un fluide caloporteur, un mélange de ces derniers, etc. Le fluide à refroidir est, selon des modes de réalisation particuliers, formé de liquide uniquement, formé de gaz uniquement, ou formé d'un mélange de gaz et de liquide. Le fluide à refroidir est avantageusement distinct (et nature différente) dudit fluide réfrigérant. Ledit fluide réfrigérant est de préférence, à ses températures et pressions de mise en oeuvre, à l'état gazeux et/ou liquide. Lesdites températures de mise en oeuvre, en particulier au sein de ladite pompe à chaleur, sont de préférence comprises entre -50 et 90°C, plus préférentiellement comprises entre -40 et 70°C. Lesdites pressions de mise en oeuvre, en particulier au sein de ladite pompe à chaleur, sont de préférence comprises entre 0,5 et 12 bars, plus préférentiellement comprises entre 0,8 et 10 bars. Ledit fluide réfrigérant est avantageusement conçu pour subir des changements d'état liquide/gaz successifs et cycliques, de préférence de manière continue, notamment au sein de ladite pompe à chaleur.

Selon une variante de l'invention, ledit mélange binaire (formant donc une partie du fluide réfrigérant, et en pratique l'essentiel de ce dernier) comprend, en proportion massique, entre 95 et 99% dudit 1,3,3,3-tétrafluoroprop-1-ène, bornes exclues, et du $CO_2$ en proportion massique strictement supérieure à 1% et strictement inférieure à 5%. Ledit mélange binaire (formant donc l'essentiel en proportion massique du fluide réfrigérant) est donc composé très majoritairement, si ce n'est exclusivement, de 1,3,3,3-tétrafluoroprop-1-ène et de $CO_2$, lesquels sont bien évidemment mélangés de façon homogène puisqu'ils sont avantageusement miscibles entre eux. En d'autres termes, le mélange binaire de 1,3,3,3-tétrafluoroprop-1-ène et de $CO_2$ ne comprend avantageusement que ces deux composés miscibles entre eux, à l'exclusion de tout autre composé miscible avec des deux composés (du moins dans des proportions significatives). Ceci signifie en substance que ledit mélange binaire ne comprend avantageusement que le 1,3,3,3-tétrafluoroprop-1-ène et le $CO_2$, nonobstant des traces éventuelles (et de préférence négligeables) d'autres composés, lesquels sont alors avantageusement présents dans une proportion totale inférieure à 0,1%, de préférence inférieur à 0,05%, lesquels autres composés n'influant préférentiellement pas sur les performances énergétiques du mélange binaire et plus globalement du fluide réfrigérant. Avantageusement, ledit fluide réfrigérant comprend, en proportion massique, plus de 1 % et moins de 5% de $CO_2$, de préférence entre 1,5% et 4,5% de $CO_2$, plus préférentiellement entre 2% et 4% de $CO_2$, encore plus préférentiellement entre 2,5% et 3,5% de $CO_2$. Selon une variante particulièrement avantageuse de l'invention, ledit fluide réfrigérant comprend, en proportion massique, environ 3% (+/-0,25%) de $CO_2$. L'expression « en proportion massique » désigne avantageusement la proportion massique du composant mentionné par rapport à la masse totale du fluide réfrigérant ou du mélange binaire selon le cas. En pratique, les proportions massiques du 1,3,3,3-tétrafluoroprop-1-ène et du $CO_2$ varient assez peu entre le fluide réfrigérant et le mélange binaire.

Selon un mode de réalisation particulier, le fluide réfrigérant comprend, en proportion massique, plus de 87,7% et moins de 99% de 1,3,3,3-tétrafluoroprop-1-ène, de préférence entre 91,9% et 98,4% de 1,3,3,3-tétrafluoroprop-1-ène, plus préférentiellement entre 93,9% et 96,4% de 1,3,3,3-tétrafluoroprop-1-ène, encore plus préférentiellement environ 95,7% +/-0,5% de 1,3,3,3-tétrafluoroprop-1-ène

De manière avantageuse, ledit mélange binaire de 1,3,3,3-tétrafluoroprop-1-ène et de $CO_2$, au sein du fluide réfrigérant, constitue comme son nom l'indique un mélange binaire formé exclusivement ou quasi-exclusivement de $CO_2$ et de 1,3,3,3-tétrafluoroprop-1-ène. Par quasi-exclusivement, on entend de préférence que si ledit mélange binaire (et plus généralement ledit fluide réfrigérant) comprend un ou plusieurs composés autres que le $CO_2$ et le 1,3,3,3-tétrafluoroprop-1-ène (et miscibles avec eux), lesdits composés autres représentent une proportion massique totale sensiblement négligeable dudit fluide réfrigérant, de préférence inférieure à 0,5%, plus préférentiellement inférieure à 0,1%, plus préférentiellement encore inférieure à 0,01%. Bien évidemment, lesdits composés autres (de préférence à l'état de traces) ne désignent avantageusement pas les nanoparticules métalliques décrites ci-après, lesquelles font partie comme on le verra du fluide réfrigérant de l'invention, et ne sont de préférence pas miscibles (en tant que particules solides) avec le mélange binaire, mais sont au contraire dispersées au sein de ce dernier.

Ainsi, selon l'invention, le fluide réfrigérant comprend en outre des nanoparticules métalliques dispersées au sein dudit mélange binaire. En d'autres termes, lesdites nanoparticules métalliques sont avantageusement en suspension au sein du mélange binaire, le tout formant le fluide réfrigérant. Lesdites nanoparticules métalliques sont de préférence, comme leur nom l'indique, des particules solides de taille moyenne nanométrique formée par des matériaux métalliques. Lesdits matériaux métalliques peuvent être issus de métaux (cuivre, fer, etc.) et/ou de métalloïdes (silicium, etc.). De manière préférentielle, lesdites nanoparticules métalliques comprennent, et de préférence sont entièrement formées par, des nanoparticules d'oxyde métallique. Selon une variante préférée de l'invention, lesdites particules métalliques comprennent, et de préférence sont entièrement formées par, des nanoparticules d'oxyde de cuivre, de préférence des nanoparticules d'oxyde de cuivre II CuO. Alternativement, ou en combinaison de ce qui précède, lesdites particules métalliques comprennent des nanoparticules d'oxyde de silicium (SiO2), et/ou des nanoparticules d'oxyde de fer. Les nanoparticules métalliques permettent d'optimiser de manière particulièrement avantageuse l'efficacité énergétique du fluide réfrigérant. En particulier, dans un échangeur frigorifique dit « *noyé* », le fluide réfrigérant (fluide de travail) est au contact d'un tube, généralement métallique, très souvent en cuivre, dans lequel passe un fluide caloporteur (souvent de l'eau glycolée). Cette eau glycolée est chaude quand elle rentre dans le tube, et ressort froide (c'est-à-dire refroidie) de ce dernier. Le refroidissement se fait par échange thermique avec le fluide réfrigérant à l'état liquide présent tout autour du tube. Les nanoparticules métalliques peuvent ainsi être assimilées à des billes de métal (ou de métalloïde, ou d'oxyde de métaux, etc.) ayant une densité et une capacité d'échange thermique plus importante que le mélange binaire seul. La présence desdites nanoparticules métalliques améliore ainsi l'échange thermique entre le fluide réfrigérant et le fluide caloporteur. Par ailleurs, la petite taille desdites nanoparticules métalliques permet en substance de remplir et lisser les porosités nanométriques des matériaux qui compose l'échangeur, en particulier ledit tube, lequel est par ailleurs souvent en cuivre comme le sont lesdites nanoparticules métalliques lorsqu'elles sont formées (en totalité ou en majorité) de nanoparticules métalliques d'oxyde de cuivre, ce qui permet une excellente compatibilité des matériaux interagissant au sein de l'échangeur. En conséquence, comme cela est indiqué ci-après au test 3 et au tableau 10 ci-après, on observe, grâce aux nanoparticules métalliques, une augmentation de l'efficacité de l'échange thermique illustrée par une amélioration du COP (coefficient de performance globale) du groupe froid mettant en oeuvre le fluide réfrigérant qui comprend lesdites nanoparticules métalliques.

De préférence, lesdites nanoparticules métalliques présentent (au moins pour la majorité d'entre elles, de préférence plus de 80% en poids d'entre elles) une taille moyenne (par exemple un diamètre moyen) comprise entre 10 et 100 nm, de préférence comprise entre 20 et 80 nm, plus préférentiellement comprise entre 25 et 70 nm, plus préférentiellement encore comprise entre 30 et 50 nm.

De manière avantageuse, ledit fluide réfrigérant ne comprend que (et donc n'est formé que par) du 1,3,3,3-tétrafluoroprop-1-ène, du $CO_2$, et lesdites nanoparticules métalliques. Ledit fluide réfrigérant ne comprend donc de préférence pas de composés autres que les trois composés susmentionnés, ou alors éventuellement à l'état de trace (par exemple moins de 0,1% en proportion massique) sans impact notable sur les performances énergétiques ou sur les caractéristiques physico-chimiques du fluide réfrigérant.

Selon un mode de réalisation particulier, le fluide réfrigérant comprend, en proportion massique, plus de 0% et moins de 8% desdites nanoparticules métalliques, de préférence entre 0,3% et 7,3% desdites nanoparticules métalliques, plus préférentiellement entre 0,6% et 3,1% desdites nanoparticules métalliques, plus préférentiellement encore entre 0,9% et 2% desdites nanoparticules métalliques, encore plus préférentiellement environ 1,3% +/-0,5% desdites nanoparticules métalliques. Selon une variante particulière, le fluide réfrigérant comprend, en proportion massique, environ 1,3% +/-0,3% desdites nanoparticules métalliques.

Selon un second aspect, l'invention concerne une utilisation d'un fluide réfrigérant tel que décrit précédemment pour transférer de l'énergie thermique, par changement d'état liquide/gaz dudit fluide réfrigérant, depuis un élément à refroidir (en particulier celui décrit précédemment et ci-après), par exemple une enceinte réfrigérée ou un fluide à refroidir, jusqu'à un milieu distinct et distant dudit fluide à refroidir. Ledit milieu est préférentiellement l'environnement extérieur (et notamment l'air libre, ou tout du moins à l'extérieur d'un bâtiment). Avantageusement, l'utilisation du fluide réfrigérant est mise en oeuvre pour refroidir ledit élément à refroidir à une température cible qui est comprise entre -20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C.

Selon un troisième aspect, l'invention concerne une installation frigorifique comprenant au moins :

- une pompe à chaleur (de préférence telle que décrite ci-avant),

- un élément à refroidir (de préférence tel que décrit ci-avant), par exemple une enceinte réfrigérée ou un fluide à refroidir, et

- un fluide réfrigérant selon l'invention conforme la description ci-avant (et ci-après),

dans laquelle ladite pompe à chaleur est conçue pour mettre en oeuvre ledit fluide réfrigérant afin de refroidir ledit élément à refroidir jusqu'à une température cible.

Bien évidemment, les caractéristiques communes aux différents aspects de l'invention sont préférentiellement identiques.

Ledit fluide réfrigérant est ainsi préférentiellement conçu pour être mis en oeuvre au sein de ladite pompe à chaleur (ou par le procédé de réfrigération comme on le verra) afin de refroidir ledit élément à refroidir jusqu'à ladite température cible. Ledit fluide réfrigérant constitue avantageusement un fluide de travail de ladite installation frigorifique, et plus précisément un fluide de travail de ladite pompe à chaleur.

Ladite température cible est de préférence une température (ou une plage de température), qui peut être approximative, que doit atteindre ledit élément à refroidir pour être mis en oeuvre de manière satisfaisante. Ladite température cible est avantageusement une température de consigne. Ladite température cible est de manière préférentielle la température de refroidissement (désirée ou atteinte) dudit élément à refroidir, ladite température de refroidissement étant préférentiellement atteinte grâce à la mise en oeuvre dudit fluide réfrigérant au sein de ladite pompe à chaleur. Bien évidemment, ledit fluide réfrigérant présente avantageusement un ou plusieurs changements de phase gaz-liquide au sein de ladite pompe à chaleur.

Selon un mode de réalisation particulier, que ce soit dans l'utilisation, le procédé de réfrigération (décrit ci-après), et/ou l'installation frigorifique (ou encore dans le procédé d'adaptation), l'élément à refroidir est de l'eau glycolée.

De manière préférentielle, ladite température cible est comprise entre -20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C. Ces températures sont particulièrement intéressantes à atteindre et souvent difficiles à maintenir de manière satisfaisante, dans les installations de systèmes frigorifiques des industries agroalimentaires, et plus particulièrement dans le domaine des stations fruitières et maraîchères, pour maintenir des chambres froides à des températures positives (0°C à 20°C, plus souvent 0°C à 10°C) à légèrement négatives (-20°C à 0°C, plus souvent -8°C à 0°C).

Ladite pompe à chaleur comprend avantageusement au moins un compresseur (ou ensemble compresseur), un condenseur, un détendeur et un évaporateur. Ledit compresseur (ou ensemble compresseur) peut par exemple être ou comprendre au moins un compresseur à piston, un compresseur à vis, un compresseur centrifuge à paliers magnétiques sans huile (Turbocorp® notamment), un compresseur à spirale, et/ou un compresseur « *spool* ».

La combinaison de $CO_2$ et de 1,3,3,3-tétrafluoroprop-1-ène dans les proportions massiques définies ci-avant permet d'obtenir ledit mélange binaire pour former ensuite, avec les nanoparticules métalliques, ledit fluide réfrigérant, lequel présente ainsi des propriétés thermodynamiques plus intéressantes que le 1,3,3,3-tétrafluoroprop-1-ène seul, en particulier lors d'une mise en oeuvre pour que la température cible (c'est-à-dire celle de l'élément à refroidir) sur la plage de température comprise entre -20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C. Ceci permet notamment de faire monter la pression d'évaporation du fluide réfrigérant par rapport au 1,3,3,3-tétrafluoroprop-1-ène employé seul, de façon à rendre possible l'évaporation dudit fluide réfrigérant à une température plus haute que ledit 1,3,3,3-tétrafluoroprop-1-ène seul. Cela permet de mettre en oeuvre ledit fluide réfrigérant au-delà des températures auxquelles le 1,3,3,3-tétrafluoroprop-1-ène seul ne permet habituellement qu'un fonctionnement insatisfaisant ponctué de nombreux arrêts de sécurité précédemment évoqués. Le fluide réfrigérant est particulièrement efficace pour l'obtention d'une température cible (ou température de refroidissement), comprises entre -20 et 20°C, de préférence comprise entre -14 et 17°C, plus préférentiellement comprise entre -8 et 15°C, plus préférentiellement encore comprise entre -6 et 10°C, encore plus préférentiellement comprise entre -5 et 8°C. Le fluide réfrigérant est donc particulièrement efficace pour refroidir un élément à refroidir jusqu'à ladite température cible. Ainsi, la plage de travail du fluide réfrigérant de l'invention est plus large que celle du 1,3,3,3-tétrafluoroprop-1-ène employé seul, et ses performances énergétiques restent excellentes. La capacité frigorifique du fluide réfrigérant (et de l'installation frigorifique l'utilisant) est même sensiblement améliorée par rapport au 1,3,3,3-tétrafluoroprop-1-ène employé seul. Le fluide réfrigérant de l'invention permet au final d'éviter les mises en arrêt de sécurité fréquentes de l'installation frigorifique en raison d'une pression de travail trop basse, tout en présentant d'excellentes performances énergétiques en particulier pour produire du froid négatif, c'est-à-dire atteindre une température inférieure à 0°C. Le fluide réfrigérant de l'invention présente en outre des caractéristiques intéressantes en ce qui concerne son innocuité. En effet, les composés qu'il comprend, et en particulier le 1,3,3,3-tétrafluoroprop-1-ène et le $CO_2$, ou même les nanoparticules métalliques (en particulier celles d'oxyde de cuivre, mais pas uniquement), sont peu polluants et peu dangereux. Ainsi, le 1,3,3,3-tétrafluoroprop-1-ène, comme indiqué précédemment, présente un impact particulièrement réduit sur l'environnement (faible pollution, toxicité basse, faible Potentiel de Réchauffement Planétaire) et une dangerosité maîtrisé vis-à-vis des personnes et équipements (faible inflammabilité). Le $CO_2$ quant à lui présente un risque de pollution négligeable voire nul, notamment un Potentiel de Réchauffement Planétaire encore plus bas que le 1,3,3,3-tétrafluoroprop-1-ène. Les nanoparticules métalliques ont généralement un impact négligeable en termes de réchauffement climatiques et de pollution chimique ou atmosphérique. Les performances énergétiques particulièrement intéressantes du fluide réfrigérant selon l'invention ont été démontrées dans plusieurs tests détaillés ci-après.

Des essais ont été menés avec :

- un fluide réfrigérant selon une mode de réalisation particulier de l'invention, comprenant, en proportions massiques, 97% de 1,3,3,3-tétrafluoroprop-1-ène et 3% de $CO_2$. Ce fluide réfrigérant particulier sera désigné par l'appellation ZEO3 pour simplifier la présentation des tests.

- un premier fluide frigorigène comprenant du 1,3,3,3-tétrafluoroprop-1-ène seul. Ce premier fluide frigorigène particulier sera désigné par l'appellation TFP pour simplifier la présentation des tests.

- un second fluide frigorigène, comprenant, en proportions massiques, 95% de 1,3,3,3-tétrafluoroprop-1-ène et 5% de $CO_2$. Ce second fluide frigorigène sera désigné par l'appellation ZEO5 pour simplifier la présentation des tests.

**Premier test**

Le premier ensemble de tests a été réalisé avec une installation frigorifique dite « *à détente directe* » comprenant une chambre froide ainsi qu'une pompe à chaleur. Cette dernière est conçue pour refroidir ladite chambre froide et comprend un compresseur à piston COPELAND® D3DC10 (initialement prévu pour fonctionner avec le fluide frigorigène désigné par R442A ou RS50, qui est un mélange HFC non azéotropique), un condenseur Guthner®, un détendeur CAREL® E4V85 et un évaporateur ALFA-LAVAL® DX50HZ. Des soupapes de décompression ont été donc ajoutées au niveau de la bouteille de réservoir liquide par mesure de sécurité. Une prise de pression a également été ajoutée au condenseur. Afin de visualiser l'état physique du fluide, des voyants ont été installés au niveau de l'aspiration du compresseur, à la sortie de l'évaporateur et au retour liquide du condenseur. L'ensemble était régulé selon le procédé dit « *HDCOLD* », avec comme base de régulation du détendeur la table de conversion pression/température du TFP. Des relevés de pression/température ont été enregistrés avec le fluide TFP comme fluide de travail, puis avec le fluide ZEO3 comme fluide de travail, et sont rapportés dans le tableau 1 ci-après. Par convention, dans les tableaux, « B » représente une unité de pression en bar, « K » représente une valeur en kelvin, « T » représente une température, « BP » signifie basse pression, « HP » signifie haute pression, « cp » signifie compresseur, « EXT » signifie l'extérieur (l'environnement extérieur, de préférence à l'extérieur d'un quelconque bâtiment et en tous cas à l'extérieur de la chambre froide), « CF » signifie chambre froide, « kWh » signifie une unité en kilowatt-heure, et « E » signifie énergie.

[TABLE 1]

| T de consigne de la chambre froide | 5.5°C | 4°C | -3,9°C |
|---|---|---|---|
| **Fluide** | TFP | ZEO3 | ZEO3 |
| **BP** | 1,1 B - 0,6°C | 1,28 B | 1,1 B |
| **HP** | 5,59 B - 33,8°C | 7,8 B | 7,5 B |
| **T refoulement cp** | 53°C | 55°C | 55°C |
| **T aspiration cp** | 7,5°C | 5,7°C | -1°C |

Dans la tableau 1, BP représente la basse pression mesurée dans la zone entre la sortie du détendeur et l'aspiration du compresseur, HP représente la haute pression mesurée dans la zone entre la sortie du compresseur et l'entrée du détendeur, « T refoulement cp » représente la température de la vapeur à la sortie du compresseur, et « T aspiration cp » représente la température de vapeur à l'entrée du compresseur.

Ce premier résultat montre ainsi une augmentation significative de la capacité frigorifique de l'installation avec le ZEO3 par rapport au TFP. En effet, la pression en zone BP avec le ZEO3 (1,28 bar) est significativement plus haute que pour le TFP (1,1 bar) pour des températures de consigne de chambre froide "proches" (4°C pour ZEO3 et 5,5°C pour TFP). Cela semble montrer que le fluide réfrigérant ZEO3 nécessite une détente moins importante pour atteindre la température recherchée que le TFP. Le fluide réfrigérant semble donc plus efficace que le TFP ici. De plus, lorsque l'on cherche à atteindre la pression équivalente de 1,1 bar pour le TFP et le ZEO3, il faut placer la consigne de chambre froide à -3,9°C pour le ZEO3 contre 5,5°C pour le TFP. Ceci montre que pour une même pression de détente (BP), la température du fluide ZEO3 "*à l'état liquide*" en sortie du détendeur présente une température plus basse que celle du TFP, ce qui signifie que le ZEO3 permet donc de mieux refroidir la chambre froide via l'évaporateur (qui est un échangeur de chaleur) que le TFP.

Les relevés du tableau 1 ont permis d'identifier des points thermodynamiques de conversion pression-température du ZEO3 qui sont exposés dans le tableau 2 ci-après.

[TABLE 2]

| RELATION PRESSION TEMPERATURE | |
|---|---|
| 1,5°C CF | 2,2 B |
| 1,8°C CF | 2,2 B |
| 2,1°C CF | 2,3 B |
| 2,6 °C CF | 2,4 B |

Ainsi, lorsque le ZEO3 traversant l'évaporateur présente une pression de 2,2 bars, la température de l'ambiance de la chambre froide est de 1,5°C à 1,8°C. On sait de manière empirique qu'un écart de 5-8°C est généralement mesuré entre la température du fluide traversant l'évaporateur et la température de l'ambiance de la chambre froide. Ainsi, à une pression de 2,2 bar, le fluide devrait avoir une température comprise entre -7°C à -3°C.

Des données thermodynamiques théoriques du ZEO3 ont également été calculées avec le logiciel REFPROP® (version 10.0 de 2018), et sont présentées dans le tableau 3 ci-après. « T de la phase liquide » représente la température de la phase liquide du fluide réfrigérant ZEO3 pour une pression donnée à un point de la pompe à chaleur (par exemple lorsque le ZEO3 est dans l'évaporateur), « T de la phase vapeur » représente la température de la phase vapeur du fluide réfrigérant ZEO3 pour une pression donnée au même point de la pompe à chaleur (par exemple au sein de l'évaporateur), « Pression de vapeur » représente la pression au même point de la pompe à chaleur (par exemple au sein de l'évaporateur).

[TABLE 3]

| Pression de vapeur (bar) | T de la phase liquide (°C) | T de la phase vapeur (°C) | Pression de vapeur (bar) | T de la phase liquide (°C) | T de la phase vapeur (°C) |
|---|---|---|---|---|---|
| 1,0 | -36,9 | 7,4 | 2,6 | -5,7 | 34,0 |
| 1,1 | -34,1 | 9,8 | 2,7 | -4,3 | 35,2 |
| 1,2 | -31,5 | 12,1 | 2,8 | -3,0 | 36,3 |
| 1,3 | -29,1 | 14,2 | 2,9 | -1,6 | 37,4 |
| 1,4 | -26,8 | 16,1 | 3,0 | -0,3 | 38,5 |
| 1,5 | -24,7 | 18,0 | 3,1 | 0,9 | 39,5 |
| 1,6 | -22,6 | 19,8 | 3,2 | 2,2 | 40,5 |
| 1,7 | -20,6 | 21,5 | 3,3 | 3,4 | 41,5 |
| 1,8 | -18,7 | 23,1 | 3,4 | 4,6 | 42,5 |
| 1,9 | -16,9 | 24,7 | 3,5 | 5,7 | 43,5 |

(suite)

| Pression de vapeur (bar) | T de la phase liquide (°C) | T de la phase vapeur (°C) | Pression de vapeur (bar) | T de la phase liquide (°C) | T de la phase vapeur (°C) |
|---|---|---|---|---|---|
| 2,0 | -15,1 | 26,1 | 3,6 | 6,9 | 44,4 |
| 2,1 | -13,4 | 27,6 | 3,7 | 8,0 | 45,3 |
| 2,2 | -11,8 | 28,9 | 3,8 | 9,1 | 46,2 |
| 2,3 | -10,2 | 30,3 | 3,9 | 10,2 | 47,1 |
| 2,4 | -8,7 | 31,6 | 4,0 | 11,2 | 47,9 |
| 2,5 | -7,2 | 32,8 | 4,1 | 12,3 | 48,8 |

En comparant les données théoriques du ZEO3 calculées à partir du logiciel REFPROP (voir tableau 3 ci-avant) avec les températures de fluide estimée grâce au mesures expérimentales, il y a un écart important. Par exemple, pour une pression de 2,2 bar, la température de fluide en phase liquide théorique donnée est de -11,8°C, alors que les estimations sont plutôt entre -7°C et -3°C. Cela montre notamment que le modèle théorique existant n'est pas suffisamment précis, en particulier dans les conditions de travail mises en oeuvre ici (basse température, faible proportion de $CO_2$). En conséquence, les outils de simulation/optimisation de procédé, qui se basent sur ces modèles théoriques "erronées", n'auraient jamais pu identifier que le fluide réfrigérant ZEO3 était adapté aux conditions de travail recherchées (en particulier entre -10°C à +15°C et à des pressions peu élevées dans la pompe à chaleur). Ceci qui rend la découverte d'autant plus surprenante. De plus, le ZEO3 étant un fluide binaire (donc zéotrope), la théorie laisse à penser qu'un phénomène de glissement de température à lieu lors du changement d'état dans les échangeurs (entre autre au niveau de l'évaporateur). Dans le domaine des installations frigorifiques, on tolère généralement l'utilisation de mélanges de fluides présentant un glissement faible de quelques degrés Celsius tout au plus. Un glissement important est la plupart du temps indésirable car il peut entraîner une difficulté de régulation voire causer des dommages au niveau des installations frigorifiques et/ou des arrêts de sécurité fréquents souvent lié à une variation de température trop importante et difficilement maîtrisable. Les simulateurs de procédé rejettent donc systématiquement les mélanges de fluides avec des propriétés à fort glissement. Par simulateur/simulation/simulés, on entend ici avantageusement des simulations par calcul basées sur des modèles numériques. Dans le cas d'un mélange de 1,3,3,3-tétrafluoroprop-1-ène et de $CO_2$, les glissements théoriques simulés sont importants (calculés à partir de modèles, a *priori* "erronées", au moins dans les conditions de pression et/ou de température des tests présentés ici, qui reproduisent au moins en partie des situations industrielles réelles). Cependant, les tests présentés ici laissent penser qu'un glissement moins important est maitrisable dans les conditions (températures dans la pompe à chaleur, température de consigne de l'enceinte réfrigérée, pression), conduisant à une meilleure efficacité du fluide réfrigérant ZEO3 par rapport au TFP. En d'autres termes, de façon surprenante, le phénomène de glissement ayant lieu avec le ZEO3 est apparemment moins important que prévu, puisque le phénomène de glissement calculé avec le logiciel REFPROP® pour le ZEO3 entraîne en théorie une température plus basse que ce qui est constaté empiriquement au tableau 2. Le ZEO3 présente donc des avantages inattendus en ce qui concerne le fonctionnement d'une installation frigorifique, ainsi que des avantages d'un point de vue énergétique qui seront vérifiés dans un deuxième test ci-après.

**Deuxième test**

Un deuxième ensemble de tests a été mené avec une installation frigorifique dite à « eau glycolée ». Sur cette installation, la production frigorifique est réalisée par une première et une seconde pompe à chaleur (ou pompes à chaleur, ou encore refroidisseurs de liquide) de marque SINOP® identiques branchées sur la même bâche (cuve réservoir d'eau glycolée) et la même température extérieure. Les deux pompes à chaleur sont chacune équipée d'un compresseur à vis BITZER® (CSH95113-320Y-40D) respectif avec la même quantité de fluide de travail. Chaque pompe à chaleur comprend donc au moins un compresseur, un condenseur, un détendeur et un évaporateur.

Les essais ont été réalisés avec, comme fluide de travail, du ZEO3 et ZEO5 dans la première pompe à chaleur. La seconde pompe à chaleur est inchangée au niveau de ses réglages et fonctionne avec le TFP comme fluide de travail pour comparaison.

Pour calculer le taux d'efficacité énergétique (ou EER pour Energy Efficiency Ratio) des compresseurs et le coefficient d'efficacité énergétique global en considérant la consommation électrique des compresseurs, des condenseurs et du circuit primaire (ou pompe primaire) de chaque pompe à chaleur (et plus précisément de chaque évaporateur), les mesures suivantes ont été réalisées pour chaque pompe à chaleur :

- enregistrements électriques du compresseur de la pompe à chaleur, du condenseur et de la pompe primaire ;

- débit glycol de la pompe primaire ;

- températures aller/retour de la pompe à chaleur ;

- température extérieure.

Le taux d'efficacité énergétique est ici calculé en faisant le rapport entre l'énergie frigorifique produite et l'énergie électrique absorbée par la pompe à chaleur considérée. La campagne de mesures a été menée durant trois semaines entre le 28 mars 2022 et le 19 avril 2022. Le passage de ZEO3 à ZEO5 dans la première pompe à chaleur a été opéré le 05/04/22 matin. Durant cette campagne de mesures, les pompes à chaleur étaient régulées de la même façon, et avaient les mêmes conditions d'exploitation et de fonctionnement. Les deux pompes à chaleur fonctionnent en parallèle pour alimenter la même bâche glycol qui dessert le froid vers les besoins (en particulier une chambre froide). La campagne de mesures a été réalisée en deux phases :

- phase 1 : première pompe à chaleur avec du ZEO3 / seconde pompe à chaleur avec du TFP (période du 28/03/2022 au 04/04/2022 à minuit) ;

- phase 2 : première pompe à chaleur avec du ZEO5 / seconde pompe à chaleur avec du TFP (période du 06/04/2022 au 19/04/2022 à 10h).

En ce qui concerne le temps de fonctionnement, pendant la phase 1, le compresseur de la première pompe à chaleur a fonctionné 27,1 heures alors que le compresseur de la seconde pompe à chaleur a fonctionné 37 heures (soit 27% du temps en moins pour le compresseur de la première pompe à chaleur par rapport à celui de la seconde pompe à chaleur) pour le même nombre de démarrages pour les deux compresseurs qui était de 293. Pendant la phase 2, le compresseur de la première pompe à chaleur a fonctionné 61,2 heures alors que le compresseur de la seconde pompe à chaleur a fonctionné 77,8 heures (soit 21 % du temps en moins pour le compresseur de la première pompe à chaleur par rapport à celui de la seconde pompe à chaleur) pour le même nombre de démarrages pour les deux compresseurs. 574 démarrages pour le compresseur de la première pompe à chaleur et 573 démarrages pour le compresseur de la seconde pompe à chaleur ont été dénombrés.

Les enregistrements de la consommation électrique moyenne des trois composants compresseur, condenseur et pompe primaire sont présentés ci-après, pour la phase 1, dans le tableau 4, et pour la phase 2, dans le tableau 5.

[TABLE 4]

| Phase 2 | E compresseur (kWh) | E condenseur (kWh) | E pompe primaire (kWh) | Total Pompe à chaleur (kWh) |
|---|---|---|---|---|
| **Première pompe à chaleur (ZEO3)** | 2157 | 300,4 | 62,9 | 2520,3 |
| **Seconde pompe à chaleur (TFP)** | 2643,2 | 460,1 | 129,6 | 3232,7 |
| **Ecart %** | 18,39% | 34,71% | 51,47% | 22,04% |

[TABLE 5]

| Phase 2 | E compresseur (kWh) | E condenseur (kWh) | E pompe primaire (kWh) | Total Pompe à chaleur (kWh) |
|---|---|---|---|---|
| **Première pompe à chaleur (ZEO5)** | 4944,8 | 763,6 | 119,7 | 5827,9 |
| **Seconde pompe à chaleur (TFP)** | 5170,2 | 936 | 242,9 | 6349,2 |

(suite)

| Phase 2 | E compresseur (kWh) | E condenseur (kWh) | E pompe primaire (kWh) | Total Pompe à chaleur (kWh) |
|---|---|---|---|---|
| Ecart (%) | 4,36% | 18,42% | 50,72% | 8,21% |

Ces relevés montrent qu'avec le ZEO3 et le ZEO5, la consommation électrique totale de la pompe à chaleur est moins importante qu'avec le TFP. Cette baisse de consommation électrique totale est cependant significativement plus marquée avec le ZEO3 en phase 1 avec un écart de 22,04 % relativement au TFP, qu'avec le ZEO5 en phase 2 avec un écart de seulement 8,21 % relativement au TFP. En d'autres termes, en phase 1, la consommation énergétique de la première pompe à chaleur utilisant le ZEO3 comme fluide de travail est 22,04 % inférieure à la consommation énergétique de la seconde pompe à chaleur (identique, pour rappel, à la première pompe à chaleur) utilisant le TFP, tandis qu'en phase 2, la consommation énergétique de la première pompe à chaleur utilisant le ZEO5 comme fluide de travail est « seulement » 8,21 % inférieure à la consommation énergétique de la seconde pompe à chaleur utilisant le TFP.

Le détail par composant montre que l'écart entre les deux phases, associé au fluide de travail utilisé, est majoritairement lié à la consommation du compresseur et du condenseur. Cela montre que le ZEO3 présente de meilleures propriétés thermodynamiques que le ZEO5.

Par ailleurs, le calcul de la puissance frigorifique « PFROID » peut être fait selon la relation :

$$PFROID = \rho \times Cp \times Q \times \Delta T$$

avec $\rho$ = 1 056 kg/m3 (densité de l'eau glycolée), Cp = 3,62 kJ/kg (chaleur spécifique ou capacité thermique massique), valeurs pour un MEG 30% (c'est-à-dire une solution aqueuse à 30% en masse de monoéthylène glycol pour la pompe primaire à -5°C), Q étant la quantité de chaleur, et $\Delta T$ étant l'écart de température d'élévation (ou de refroidissement) entre l'entrée et la sortie d'eau glycolée dans l'échangeur du circuit primaire (qui forme en substance l'évaporateur).

Les résultats du calcul de puissance frigorifique PFROID sont donnés dans le tableau 6 pour la phase 1, et dans le tableau 7 pour la phase 2.

[TABLE 6]

| Phase 1 | PFROID *(kWh)* | $\Delta T$ *moy (°C)* |
|---|---|---|
| **Première pompe à chaleur (ZEO3)** | 6414,8 | 2,5 |
| **Seconde pompe à chaleur (TFP)** | 5283,6 | 1,7 |
| **Ecart** | **21,4%** | 0,8°C |

[TABLE 7]

| Phase 2 | PFROID *(kWh)* | $\Delta T$ *moy (°C)* |
|---|---|---|
| **Première pompe à chaleur (ZEO5)** | 12957,1 | 2,7 |
| **Seconde pompe à chaleur (TFP)** | 9693,7 | 1,7 |
| **Ecart** | **33,6 %** | 1°C |

Les résultats montrent une différence significative du $\Delta T$ moyen de la boucle glycol entre les deux pompes à chaleur de 0,8°C avec le ZEO3 et 1°C avec le ZEO5 comparé au TFP. Cet écart important sur le $\Delta T$ démontre que l'efficacité de production frigorifique est significativement meilleure lorsque la première pompe à chaleur utilise comme fluide de travail le ZEO3 ou le ZEO5 que lorsqu'elle utilise le TFP. Cette meilleure production frigorifique de la première pompe à chaleur est mesurée à 21,4% avec le ZEO3 et à 33,6% avec le ZEO5, par rapport à la seconde pompe à chaleur avec le R-1234ze pur respectivement en phase 1 et 2.

Le taux d'efficacité énergétique (ou EER), qui permet de mesurer la performance énergétique des première et seconde pompes à chaleur selon leur fluide de travail, est ainsi calculé en divisant la puissance frigorifique PFROID (tableaux 6 et 7) par la performance énergétique E (tableaux 4 et 5), et donné dans le tableau 8 pour la phase 1 et le tableau 9 pour la phase 2, ci-après.

[TABLE 8]

| Phase 1 | EER compresseur | EER global |
|---|---|---|
| Première pompe à chaleur (ZEO5) | 2,98 | 2,55 |
| Seconde pompe à chaleur (TFP) | 2,00 | 1,64 |
| Ecart performance (%) | 49% | 56% |

[TABLE 9]

| Phase 2 | EER compresseur | EER global |
|---|---|---|
| Première pompe à chaleur (ZEO5) | 2,62 | 2,22 |
| Seconde pompe à chaleur (TFP) | 1,87 | 1,53 |
| Ecart performance (%) | 40% | 46% |

En considérant le fonctionnement des compresseurs seuls, la performance la plus élevée est pour la première pompe à chaleur utilisant du ZEO3 comme fluide de travail (phase 1). La première pompe à chaleur (utilisant du ZEO5 ou ZEO3) présente une performance toujours plus élevée que la seconde pompe à chaleur (utilisant du TFP). Cet écart de performance est au-dessus des 40% (phase 2) jusqu'à 49% (phase 1) en moyenne.

En considérant les consommations électriques de la pompe à chaleur (dont le compresseur, le condenseur et la pompe primaire), nous avons le taux d'efficacité énergétique global (EER global) de la pompe à chaleur. Celle-ci met en évidence un écart de performance encore plus élevé entre la première pompe à chaleur (utilisant du ZEO5 ou ZEO3) et la seconde pompe à chaleur (utilisant du TFP). Cet écart de performance est au-dessus des 46% (phase 2) jusqu'à 56% (phase 1) en moyenne.

L'utilisation du ZEO3 comme fluide de travail apporte ainsi une bien meilleure efficacité énergétique de la pompe à chaleur, comparée à l'utilisation du TFP comme fluide de travail.

Par ailleurs, l'écart de performance entre les deux phases 1 et 2 a chuté d'environ 10% que ce soit sur l'EER compresseur ou l'EER global. L'utilisation du ZEO3 comme fluide de travail apporte ainsi une efficacité énergétique de la pompe à chaleur qui est significativement meilleure, comparée à l'utilisation du ZEO5 comme fluide de travail.

L'utilisation du ZEO3 comme fluide de travail présente donc une meilleure performance énergétique qu'avec le TFP ou le ZEO5. Cela est particulièrement intéressant au regard de la consommation électrique (décrite précédemment) qui est moindre avec le ZEO3, pour une production frigorifique plus importante. Le ZEO5 quant à lui permet d'obtenir une meilleure production frigorifique (tableau 7) que le TFP, mais nécessite une consommation électrique qui le rend moins intéressant, en terme de performances énergétiques, que le ZEO3.

**Explications théoriques concernant les premier et deuxième tests**

L'amélioration de la performance énergétique du ZEO3 par rapport au TFP pourrait s'expliquer par le phénomène de glissement obtenue par l'association de 1,3,3,3-tétrafluoroprop-1-ène avec une faible proportion massique de $CO_2$ (3% dans le cas du ZEO3), ce glissement étant toutefois suffisamment réduit pour ne pas perturber le fonctionnement de l'installation. Le glissement se retrouvant au niveau de l'évaporateur (qui est en substance un échangeur de chaleur), la puissance frigorifique du ZEO3 est plus importante que celle du TFP, sans modification significative de l'installation. Seul un ajustement des paramétrages est éventuellement nécessaire. En se basant sur un article scientifique (Low, R. E.; Wiegand, J. M.; Murphy, F. T.; and Corr, S., "Performance of an Industrial Réfrigération System Using R-407A in a Flooded Evaporator" (1998). International Réfrigération and Air Conditioning Conférence. Paper 384), nous pouvons extrapoler sur le comportement du ZEO3 dans l'installation. Dans l'article scientifique, le R470A est étudié dans un régime évaporateur noyé avec un compresseur à vis. Le R470A est un mélange de fluide contenant du R32, du R125 et du R134a. Il a été mesuré en trois points de l'installation frigorifique (à la sortie de l'évaporateur, à l'aspiration du compresseur, et à la sortie liquide haute pression) la concentration exacte des 3 fluides. La concentration mesurée est différente de la concentration initiale du mélange R470A. Par contre la concentration mesurée ne varie quasiment pas en chaque point de prélèvement sur l'installation. Il y a certainement du glissement dans l'évaporateur, mais à sa sortie la proportion de chaque composant est stable. Donc, le mélange se comporte comme un fluide « pure », bien qu'il y ait du glissement dans l'évaporateur. Dans le cas du ZEO3, il semble, au regard des résultats expérimentaux, que le même phénomène se produise avec une concentration stable de 1,3,3,3-tétrafluoroprop-1-ène et de $CO_2$ dans toute l'installation. Cela permet de réguler correctement l'installation malgré le glissement dans les échangeurs de chaleur au niveau de l'évaporateur et/ou du condenseur. En extrapolant à partir des données théoriques, le glissement au sein d'une pompe à chaleur fonctionnant avec du ZEO3 comme fluide de travail devrait se situer entre 15°C et 20°C.

De plus, le glissement de température peut être intéressant au niveau des échangeurs de chaleur (l'évaporateur et/ou le condenseur) car il permet d'avoir une moindre différence de température entre les courants chaud et froid (le profil de température de la source froide ou chaude (glycol) se rapproche). Cela réduit les pertes et permet d'avoir un meilleur échange de chaleur et donc un meilleur rendement. Le fait de rajouter du $CO_2$ permet de translater le diagramme pression/enthalpie du ZEO3 vers le "haut" par rapport à celui du TFP, comme illustré à la figure 1, et permet ainsi obtenir des températures plus basses pour les mêmes pressions de fonctionnement que si on fonctionnait au TFP (c'est-à-dire au 1,3,3,3-tétrafluoroprop-1-ène seul). Cela va modifier les enthalpies au niveau de l'évaporateur et à l'entrée et la sortie du compresseur. La superposition, illustrée à la figure 1, des diagrammes pression-enthalpie théoriques du TFP (en deux lignes continues) et du ZEO3 (en deux lignes pointillées, celle de droite étant en partie confondue avec une ligne continue du TFP dans sa partie inférieure) calculé avec REFPROP montre une variation de l'enthalpie de vaporisation (différence entre enthalpie vapeur et liquide). Il y a un décalage en pression et en enthalpie ce qui permet d'augmenter la quantité de chaleur échangée à l'évaporateur et créer un sous-refroidissement au niveau du condenseur, permettant ainsi d'améliorer les performances énergétiques. Dans la figure 1, les deux lignes les plus à gauche représentent les courbes d'enthalpie-pression liquide respectives du TFP (pour la ligne continue) et du ZEO3 (pour la ligne en pointillée), et les deux lignes les plus à droites représentent les courbes d'enthalpie-pression vapeur respectives du TFP (pour la ligne continue) et du ZEO3 (pour la ligne en pointillée).

### Troisième test

Dans le tableau ci-dessous sont présentés les coefficients de performance globale (COP) d'un groupe froid (en substance, une installation frigorifique comprenant une pompe à chaleur) mettant en oeuvre soit un fluide frigorigène (colonne du milieu), soit un fluide réfrigérant (colonne de droite), selon différentes proportions de nanoparticules métalliques d'oxyde de cuivre CuO (colonne de gauche). Les mesures ont été réalisés pendant 72h par ajout successif de nanoparticules dans le fluide concerné (frigorigène colonne du milieu, et réfrigérant colonne de gauche). Les valeurs de COP présentées ont été pondérées et moyennées pour des températures extérieures comprises entre 20 et 25°C.

[TABLE 10]

| % massique de nanoparticules de CuO | COP R1234ze(E) seul (R1234ze(E) %) | COP Mélange binaire (R1234ze(E) % - CO₂ %) |
|---|---|---|
| 0% | 1,65 (100%) | 2,57 (97%-3%) |
| 0,6% | 1,73 (99,4%) | 2,73 (96,4%-3%) |
| 1,3% | 2,01 (98,7%) | 3,23 (95,7%-3%) |
| 3,1% | 1,78 (96,9%) | 3,08 (93,9%-3%) |
| 7,3% | 1,89 (92,7%) | 3,04 (89,7%-3%) |
| 9,8% | 1,31 (90,2%) | 2,47 (87,2%-3%) |

Un test comparatif a ainsi été réalisé entre :

- d'une part un fluide frigorigène classique (colonne du milieu), formé d'une phase liquide pure contenant seulement du 1,3,3,3-tétrafluoroprop-1-ène (R1234ze(E) seul) dans laquelle des nanoparticules d'oxyde de cuivre CuO sont rajoutées au fur et à mesure, les différentes proportions massiques de nanoparticules d'oxyde de cuivre CuO étant données dans la colonne de gauche,
- et d'autre part, un mélange binaire formé de 1,3,3,3-tétrafluoroprop-1-ène et de $CO_2$ (colonne de droite) dans lequel des nanoparticules d'oxyde de cuivre CuO sont rajoutées au fur et à mesure pour former un fluide réfrigérant selon l'invention, les différentes proportions massiques de nanoparticules d'oxyde de cuivre CuO étant données dans la colonne de gauche.

Ainsi, dans la colonne du milieu, le % donné représente la proportion massique de 1,3,3,3-tétrafluoroprop-1-ène (R1234ze(E)), le reste étant formé de nanoparticules de cuivre CuO (colonne de gauche).

Dans la colonne de droite, le % de gauche représente la proportion massique de 1,3,3-tétrafluoroprop-1-ène (R1234ze(E)), tandis que le % de droite représente la proportion massique de $CO_2$ (également appelé R744), le reste étant formé de nanoparticules d'oxyde de cuivre CuO (colonne de gauche). On note que la proportion massique de $CO_2$ reste constante à 3%, tandis que celle du 1,3,3,3-tétrafluoroprop-1-ène varie de manière inversement proportionnelle à la variation de proportion massique de nanoparticules d'oxyde de cuivre CuO ; lorsque la proportion massique de nanoparticules d'oxyde de cuivre CuO augmente, celle de 1,3,3,3-tétrafluoroprop-1-ène diminue d'autant, le tout ($CO_2$, 1,3,3,3-tétrafluoroprop-1-ène, nanoparticules CuO) faisant donc 100%.

Les valeurs données dans les colonnes du milieu et de droite qui ne sont pas entre parenthèses sont les coefficients de performance globale (COP) mesurés du groupe froid.

Les nanoparticules d'oxyde de cuivre CuO ont été sélectionnées pour plusieurs raisons. Tout d'abord, elles sont abondantes naturellement et donc relativement peu chères comparées aux autres nanoparticules. De plus, le cuivre est le matériau utilisé dans la grande majorité des installations frigorifiques courantes, en particulier dans le domaine des stations fruitières et maraîchères, notamment au niveau des échangeurs de chaleur. Ceci permet de limiter les problèmes d'incompatibilité et d'interaction complexe.

Tout d'abord, on constate qu'à 0% de nanoparticules, le mélange binaire présente un bien meilleur COP que le fluide frigorigène formé seulement de 1,3,3,3-tétrafluoroprop-1-ène (R1234ze(E) seul), ce qui confirme les résultats observés aux tests 1 et 2 ci-avant. Ensuite, les résultats exposés au tableau 10 ci-avant mettent en évidence l'amélioration nette de la performance du groupe froid lors de l'ajout de nanoparticules de CuO au moins jusqu'à une proportion massique de 7,3% massique, que ce soit dans le fluide frigorigène formé de 1,3,3,3-tétrafluoroprop-1-ène seul et de nanoparticules de CuO (colonne du milieu, sauf première valeur sans CuO), ou dans le fluide réfrigérant formé de 1,3,3,3-tétrafluoroprop-1-ène, de CO2 et de nanoparticules de CuO (colonne de droite, sauf première valeur sans CuO). On observe une amélioration du COP particulièrement intéressante de 0% à 1,3% de nanoparticules de CuO ajouté. Il existe un optimum du COP à 1,3% de CuO. Le COP diminue ensuite légèrement de 1,3% jusqu'à 7,3% de CuO, en restant supérieur au COP avant de chuter complètement à 9,8% de CuO.

## Explications théoriques concernant le troisième test

De façon théorique, le phénomène de chute du COP à 9,8% de nanoparticules de CuO pourrait être lié à l'augmentation drastique de la viscosité du fluide au-delà de 7,3% (ou un peu plus, par exemple 8%) de CuO, venant atténuer l'effet positif de l'ajout des nanoparticules en suspension. Le brassage et les interactions des nanoparticules en suspension dans le fluide et la paroi de l'échangeur de chaleur du groupe froid semblent donc être perturbés. Cela marque un point de rupture faisant perdre le gain énergétique du groupe froid.

Un résultat très intéressant est la différence de COP entre le fluide R1234ze(E) pur et le mélange binaire R1234ze(E)-$CO_2$ (3% de $CO_2$). En présence de $CO_2$, l'ajout de 1,3% de nanoparticules de CuO augmente de façon significative le COP qui passe de 2,57 à 3,23. Cette amélioration de COP par le $CO_2$ serait liée à la viscosité initialement plus faible du fluide avec 3% $CO_2$, et associé à son état gazeux. Le brassage de l'ensemble comprenant des nanoparticules CuO, des micro-bulles de $CO_2$ et du R1234ze(E) liquide (1,3,3,3-tétrafluoroprop-1-ène liquide) aurait une meilleure dynamique. Cela augmenterait donc le taux de contact entre les nanoparticules et la paroi de l'échangeur, améliorant ainsi l'échange thermique global. En d'autres termes, l'ajout de $CO_2$ au 1,3,3,3-tétrafluoroprop-1-ène permettrait d'optimiser l'avantage apporté par l'ajout de nanoparticules de CuO en termes d'échange thermique, le $CO_2$ venant en quelques sortes « *fluidifier* » le fluide réfrigérant et contrebalancer ainsi l'augmentation potentielle de viscosité provoquée par l'ajout des nanoparticules de CuO.

Selon un quatrième aspect, l'invention concerne un procédé de réfrigération comprenant successivement et cycliquement :

- une étape de compression, lors de laquelle un fluide réfrigérant (de préférence tel que mentionné ci-avant) à l'état vapeur est comprimé et voit sa pression et sa température augmenter, ledit fluide réfrigérant comprenant, selon une variante particulière, en proportions massiques, entre 95 et 99% de 1,3,3,3-tétrafluoroprop-1-ène, et du $CO_2$ en proportion massique strictement supérieure à 1% et strictement inférieure à 5%,

- une étape de condensation, lors de laquelle ledit fluide réfrigérant perd de la chaleur et ainsi passe à l'état liquide sous pression,

- une étape de détente, lors de laquelle ledit fluide réfrigérant subit une baisse de pression et en conséquence une vaporisation partielle,

- une étape d'évaporation, lors de laquelle ledit fluide réfrigérant partiellement vaporisé absorbe de la chaleur et en conséquence est totalement vaporisé.

EP 4 321 591 A1

Ledit fluide réfrigérant mise en oeuvre dans le procédé de réfrigération est celui ci-avant, c'est-à-dire qu'il comprend d'une part du 1,3,3,3-tétrafluoroprop-1-ène et du $CO_2$ formant un mélange binaire, et d'autre part des nanoparticules métalliques dispersées au sein dudit mélange binaire. Bien évidemment, la composition du fluide réfrigérant décrite ici est avantageusement celle globalement mise en oeuvre dans le procédé de réfrigération, puisque dans certaines étapes où le fluide réfrigérant est au moins en partie vaporisé, il ne comprend localement pas de nanoparticules métalliques (lesquelles ne passent habituellement pas en phase vapeur ou gazeuse).

Bien évidemment, ledit procédé de réfrigération est avantageusement mis en oeuvre par une installation frigorifique de l'invention telle que décrite ci-avant (et/ou plus précisément par une pompe à chaleur telle que décrite ci-avant), et inversement, ladite installation frigorifique est préférentiellement conçue pour mettre en oeuvre ledit procédé de réfrigération.

De manière préférentielle, le procédé de réfrigération décrit ci-avant et ci-après est conçu pour refroidir un élément à refroidir (lui-même de préférence tel que décrit précédemment), de préférence jusqu'à une température cible (de préférence celle déjà mentionnée ci-avant), ladite température cible étant avantageusement comprise entre - 20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C .

Selon un mode de réalisation particulier, juste après l'étape d'évaporation, ledit fluide réfrigérant présente une pression comprise entre 1,6 et 2,8 bars, de préférence comprise entre 1,8 et 2,6 bars, plus préférentiellement comprise entre 2 et 2,4 bars, plus préférentiellement encore environ égale à 2,2 (+/-0,1) bars, ledit fluide réfrigérant présentant en outre une température comprise entre -11 et 1°C, de préférence comprise entre -9 et -1 °C, plus préférentiellement comprise entre -8 et -2°C, plus préférentiellement encore comprise entre -7 et -3°C, ledit élément à refroidir étant refroidi (grâce au procédé de réfrigération et/ou à l'installation frigorifique de l'invention) à une température comprise entre 1 et 2,3°C, de préférence entre 1,2 et 2,1°C, plus préférentiellement comprise entre 1,4 et 1,9°C, plus préférentiellement encore comprise entre 1,5 et 1,8°C. Ce dernier mode de réalisation particulier peut notamment être avantageux dans le cas des installations frigorifiques dites « *à détente directe* ».

Selon un cinquième aspect de l'invention, celle-ci concerne un procédé d'adaptation d'une pompe à chaleur utilisant initialement, comme fluide de travail, un fluide frigorigène différent du fluide réfrigérant décrit ci-avant, en particulier un fluide frigorigène formé à plus de 99% en proportion massique de 1,3,3,3-tétrafluoroprop-1-ène, ledit procédé comprenant au moins :

- une étape d'extraction du fluide frigorigène hors de ladite pompe à chaleur,

- une étape d'introduction, au sein de ladite pompe à chaleur, du fluide réfrigérant selon l'invention conforme à la description ci-avant comme fluide de travail pour ladite pompe à chaleur.

Il est ainsi avantageusement possible, grâce au fluide réfrigérant de l'invention, de modifier une pompe à chaleur, initialement conçue pour fonctionner avec du 1,3,3,3-tétrafluoroprop-1-ène seul (en tant que fluide de travail), pour adapter ladite pompe à l'invention. Il suffit de remplacer, au sein de ladite pompe à chaleur le 1,3,3,3-tétrafluoroprop-1-ène par le fluide réfrigérant de l'invention, ce qui permet à ladite pompe à chaleur de fonctionner à plus basse température, c'est-à-dire de refroidir (en particulier un élément à refroidir tel que mentionné précédemment) à une température cible plus basse, puisque ladite pompe à chaleur ne subit plus d'arrêt de mise en sécurité intempestifs. Une telle pompe à chaleur munie du fluide réfrigérant (à la place du 1,3,3,3-tétrafluoroprop-1-ène seul notamment) peut avantageusement former une partie d'une installation frigorifique au sens de l'invention, c'est-à-dire telle que décrite ci-avant.

L'invention est particulièrement adaptée à la mise en oeuvre d'installations frigorifiques.

## Revendications

**1.** Fluide réfrigérant comprenant d'une part du 1,3,3,3-tétrafluoroprop-1-ène et du $CO_2$ formant un mélange binaire, et d'autre part des nanoparticules métalliques dispersées au sein dudit mélange binaire.

**2.** Fluide réfrigérant selon la revendication précédente, caractérisé en ce ledit mélange binaire comprend, en proportion massique, entre 95 et 99% dudit 1,3,3,3-tétrafluoroprop-1-ène, bornes exclues, et du $CO_2$ en proportion massique strictement supérieure à 1% et strictement inférieure à 5%.

**3.** Fluide réfrigérant selon la revendication 1 ou 2, **caractérisé en ce qu'**il comprend, en proportion massique, entre 1,5% et 4,5% de $CO_2$, de préférence entre 2% et 4% de $CO_2$, plus préférentiellement entre 2,5% et 3,5% de $CO_2$, plus préférentiellement encore environ 3% +/-0,25% de $CO_2$.

**4.** Fluide réfrigérant l'une quelconque des revendications précédentes, **caractérisé en ce qu'**il comprend, en proportion massique, plus de 87,7% et moins de 99% de 1,3,3,3-tétrafluoroprop-1-ène, de préférence entre 91,9% et 98,4% de 1,3,3,3-tétrafluoroprop-1-ène, plus préférentiellement entre 93,9% et 96,4% de 1,3,3,3-tétrafluoroprop-1-ène, encore plus préférentiellement environ 95,7% +/-0,5% de 1,3,3,3-tétrafluoroprop-1-ène.

**5.** Fluide réfrigérant selon l'une quelconque des revendications précédentes, **caractérisé en ce qu'**il comprend, en proportion massique, plus de 0% et moins de 8% desdites nanoparticules métalliques, de préférence entre 0,3% et 7,3% desdites nanoparticules métalliques, plus préférentiellement entre 0,6% et 3,1% desdites nanoparticules métalliques, plus préférentiellement encore entre 0,9% et 2% desdites nanoparticules métalliques, encore plus préférentiellement environ 1,3% +/-0,5% desdites nanoparticules métalliques.

**6.** Fluide réfrigérant selon l'une quelconque des revendications précédentes, **caractérisé en ce que** lesdites nanoparticules métalliques comprennent, et de préférence sont entièrement formées par, des nanoparticules d'oxyde métallique.

**7.** Fluide réfrigérant selon l'une quelconque des revendications précédentes, **caractérisé en ce que** lesdites particules métalliques comprennent, et de préférence sont entièrement formées par, des nanoparticules d'oxyde de cuivre, de préférence des nanoparticules d'oxyde de cuivre II CuO.

**8.** Fluide réfrigérant selon l'une quelconque des revendications précédentes, **caractérisé en ce que** ledit 1,3,3,3-tétrafluoroprop-1-ène est du trans-1,3,3,3-tétrafluoroprop-1-ène.

**9.** Utilisation d'un fluide réfrigérant selon l'une quelconque des revendications précédentes pour transférer de l'énergie thermique, par changement d'état liquide/gaz dudit fluide réfrigérant, depuis un élément à refroidir, par exemple une enceinte réfrigérée ou un fluide à refroidir, jusqu'à un milieu distinct et distant dudit élément à refroidir.

**10.** Utilisation du fluide réfrigérant selon la revendication précédente, pour refroidir ledit élément à refroidir à une température cible qui est comprise entre -20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C.

**11.** Installation frigorifique comprenant au moins :

- une pompe à chaleur,
- un élément à refroidir, par exemple une enceinte réfrigérée ou un fluide à refroidir, et
- un fluide réfrigérant selon l'une quelconque desdites revendications 1 à 8,

dans laquelle ladite pompe à chaleur est conçue pour mettre en oeuvre ledit fluide réfrigérant afin de refroidir ledit élément à refroidir jusqu'à une température cible.

**12.** Installation frigorifique selon la revendication précédente, dans laquelle ladite température cible est comprise entre -20 et 20°C, de préférence comprise entre -14 et 17°C, plus préférentiellement comprise entre -8 et 15°C, plus préférentiellement encore comprise entre -6 et 10°C, plus préférentiellement encore comprise entre -5 et 8°C.

**13.** Procédé d'adaptation d'une pompe à chaleur utilisant initialement, comme fluide de travail, un fluide frigorigène différent du fluide réfrigérant des revendications 1 à 8, en particulier un fluide frigorigène formé à plus de 99% en proportion massique de 1,3,3,3-tétrafluoroprop-1-ène, ledit procédé comprenant au moins :

- une étape d'extraction du fluide frigorigène hors de ladite pompe à chaleur,
- une étape d'introduction, au sein de ladite pompe à chaleur, du fluide réfrigérant selon l'une quelconque des revendications 1 à 8, comme fluide de travail pour ladite pompe à chaleur.

**14.** Procédé de réfrigération comprenant successivement et cycliquement :

- une étape de compression, lors de laquelle un fluide réfrigérant à l'état vapeur est comprimé et voit sa pression et sa température augmenter,
- une étape de condensation, lors de laquelle ledit fluide réfrigérant perd de la chaleur et ainsi passe à l'état liquide sous pression,

- une étape de détente, lors de laquelle ledit fluide réfrigérant subit une baisse de pression et en conséquence une vaporisation partielle,
- une étape d'évaporation, lors de laquelle ledit fluide réfrigérant partiellement vaporisé absorbe de la chaleur et en conséquence est totalement vaporisé,

ledit fluide réfrigérant étant conforme à l'une quelconque des revendications 1 à 8.

15. Procédé de réfrigération selon la revendication précédente, conçu pour refroidir un élément à refroidir, et où juste après l'étape d'évaporation, ledit fluide réfrigérant présente une pression comprise entre 1,6 et 2,8 bars, de préférence comprise entre 1,8 et 2,6 bars, plus préférentiellement comprise entre 2 et 2,4 bars, plus préférentiellement encore environ égale à 2,2 (+/-0,1) bars, ledit fluide réfrigérant présentant en outre une température comprise entre -11 et 1°C, de préférence comprise entre -9 et -1°C, plus préférentiellement comprise entre -8 et -2°C, plus préférentiellement encore comprise entre -7 et -3°C, ledit élément à refroidir étant refroidi à une température comprise entre 1 et 2,3°C, de préférence entre 1,2 et 2,1°C, plus préférentiellement comprise entre 1,4 et 1,9°C, plus préférentiellement encore comprise entre 1,5 et 1,8°C.

**FIG 1**

Europäisches
Patentamt

European
Patent Office

Office européen
des brevets

**RAPPORT DE RECHERCHE EUROPEENNE**

Numéro de la demande

**EP 23 19 0872**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 108 430 760 A (ARKEMA FRANCE) 21 août 2018 (2018-08-21) * alinéas [0001], [0227] – [0229], [0232] – [0235], [0243] * ----- | 1-15 | INV. C09K5/04 |
| X | XING MEIBO ET AL: "An Update Review on Performance Enhancement of Refrigeration Systems Using Nano-Fluids", JOURNAL OF THERMAL SCIENCE, KEXUE CHUBANSHE, CN, vol. 31, no. 4, 23 mai 2022 (2022-05-23), pages 1236-1251, XP037907352, ISSN: 1003-2169, DOI: 10.1007/S11630-022-1607-8 [extrait le 2022-05-23] * Introduction * ----- | 1-15 | |
| X | FR 3 081 865 A1 (ARKEMA FRANCE [FR]) 6 décembre 2019 (2019-12-06) * page 1, lignes 10-14 * * page 2, ligne 2829 * * page 4, lignes 35-38 * * page 7, lignes 21-24 * * page 8, lignes 32-33; revendications * ----- | 1-15 | |
| X | US 2016/215193 A1 (LOW ROBERT E [GB]) 28 juillet 2016 (2016-07-28) * revendications 22,59; tableau 81 * ----- | 1-15 | DOMAINES TECHNIQUES RECHERCHES (IPC) C09K |
| X | US 2014/124699 A1 (LOW ROBERT E [GB]) 8 mai 2014 (2014-05-08) * page 4, ligne 16 – page 5, ligne 9; revendications 1-22,54; figure 1; tableaux * ----- -/-- | 1-15 | |

Le présent rapport a été établi pour toutes les revendications

| Lieu de la recherche | Date d'achèvement de la recherche | Examinateur |
|---|---|---|
| La Haye | 7 décembre 2023 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 23 19 0872**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2005/108523 A1 (HONEYWELL INT INC [US]; SINGH RAJIV R [US] ET AL.) 17 novembre 2005 (2005-11-17) * page 28, ligne 22 – page 29, ligne 13; revendications 1-4,28,43; figures 1-4 * ----- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 7 décembre 2023 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 23 19 0872**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**07-12-2023**

| Document brevet cité au rapport de recherche | Date de publication | Membre(s) de la famille de brevet(s) | Date de publication |
|---|---|---|---|
| CN 108430760 A | 21-08-2018 | CN 108430760 A | 21-08-2018 |
| | | EP 3390039 A1 | 24-10-2018 |
| | | FR 3044959 A1 | 16-06-2017 |
| | | JP 6983782 B2 | 17-12-2021 |
| | | JP 2019501797 A | 24-01-2019 |
| | | KR 20180093996 A | 22-08-2018 |
| | | US 2018361699 A1 | 20-12-2018 |
| | | US 2020101689 A1 | 02-04-2020 |
| | | WO 2017103466 A1 | 22-06-2017 |
| FR 3081865 A1 | 06-12-2019 | CN 112400006 A | 23-02-2021 |
| | | EP 3802724 A1 | 14-04-2021 |
| | | FR 3081865 A1 | 06-12-2019 |
| | | JP 2021525823 A | 27-09-2021 |
| | | US 2021155839 A1 | 27-05-2021 |
| | | WO 2019234353 A1 | 12-12-2019 |
| US 2016215193 A1 | 28-07-2016 | AU 2011254380 A1 | 06-12-2012 |
| | | AU 2011254381 A1 | 06-12-2012 |
| | | BR 112012029456 A2 | 07-03-2017 |
| | | BR 112012029468 A2 | 24-01-2017 |
| | | CA 2799840 A1 | 24-11-2011 |
| | | CA 2799846 A1 | 24-11-2011 |
| | | CN 102939350 A | 20-02-2013 |
| | | CN 102939351 A | 20-02-2013 |
| | | CN 102947408 A | 27-02-2013 |
| | | CN 102947409 A | 27-02-2013 |
| | | EP 2571953 A2 | 27-03-2013 |
| | | EP 2571954 A2 | 27-03-2013 |
| | | EP 2571955 A2 | 27-03-2013 |
| | | EP 2571956 A2 | 27-03-2013 |
| | | ES 2547550 T3 | 07-10-2015 |
| | | ES 2561671 T3 | 29-02-2016 |
| | | ES 2565088 T3 | 31-03-2016 |
| | | JP 5824039 B2 | 25-11-2015 |
| | | JP 5827992 B2 | 02-12-2015 |
| | | JP 2013528235 A | 08-07-2013 |
| | | JP 2013531704 A | 08-08-2013 |
| | | JP 2013533326 A | 22-08-2013 |
| | | JP 2013533896 A | 29-08-2013 |
| | | KR 20130082095 A | 18-07-2013 |
| | | KR 20130082096 A | 18-07-2013 |
| | | PL 2571953 T3 | 29-02-2016 |
| | | PL 2571954 T3 | 30-06-2016 |
| | | PL 2571956 T3 | 30-06-2016 |
| | | RU 2012155280 A | 27-06-2014 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE
## RELATIF A LA DEMANDE DE BREVET EUROPEEN NO.

EP 23 19 0872

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-12-2023

| Document brevet cité au rapport de recherche | Date de publication | Membre(s) de la famille de brevet(s) | Date de publication |
|---|---|---|---|
| | | RU 2012155282 A | 27-06-2014 |
| | | US 2013119299 A1 | 16-05-2013 |
| | | US 2013126776 A1 | 23-05-2013 |
| | | US 2013126777 A1 | 23-05-2013 |
| | | US 2013126778 A1 | 23-05-2013 |
| | | US 2016215193 A1 | 28-07-2016 |
| | | WO 2011144905 A2 | 24-11-2011 |
| | | WO 2011144906 A2 | 24-11-2011 |
| | | WO 2011144907 A2 | 24-11-2011 |
| | | WO 2011144908 A2 | 24-11-2011 |
| | | WO 2011144909 A2 | 24-11-2011 |
| US 2014124699 A1 | 08-05-2014 | AU 2010353438 A1 | 06-12-2012 |
| | | BR 112012029453 A2 | 07-03-2017 |
| | | CA 2799836 A1 | 24-11-2011 |
| | | CN 102250586 A | 23-11-2011 |
| | | DE 102010053785 A1 | 24-11-2011 |
| | | EP 2571952 A1 | 27-03-2013 |
| | | EP 2957617 A1 | 23-12-2015 |
| | | ES 2546062 T3 | 18-09-2015 |
| | | FR 2960241 A1 | 25-11-2011 |
| | | GB 2480513 A | 23-11-2011 |
| | | JP 5341922 B2 | 13-11-2013 |
| | | JP 2011256361 A | 22-12-2011 |
| | | KR 20110128124 A | 28-11-2011 |
| | | KR 20140024024 A | 27-02-2014 |
| | | PL 2571952 T3 | 29-01-2016 |
| | | RU 2012155285 A | 27-06-2014 |
| | | US 2014124699 A1 | 08-05-2014 |
| | | WO 2011144885 A1 | 24-11-2011 |
| WO 2005108523 A1 | 17-11-2005 | AU 2005241046 A1 | 17-11-2005 |
| | | CN 1973016 A | 30-05-2007 |
| | | CN 104817999 A | 05-08-2015 |
| | | CN 104845588 A | 19-08-2015 |
| | | CN 108753258 A | 06-11-2018 |
| | | DE 10181402 T1 | 07-07-2011 |
| | | EP 1743010 A1 | 17-01-2007 |
| | | EP 2261296 A2 | 15-12-2010 |
| | | ES 2358184 T1 | 06-05-2011 |
| | | ES 2594182 T3 | 16-12-2016 |
| | | HU E030448 T2 | 29-05-2017 |
| | | JP 5279263 B2 | 04-09-2013 |
| | | JP 6169159 B2 | 26-07-2017 |
| | | JP 6426788 B2 | 21-11-2018 |
| | | JP 2007536390 A | 13-12-2007 |

Pour tout renseignement concernant cette annexe : voir Journal Officiel de l'Office européen des brevets, No.12/82

EPO FORM P0460

## ANNEXE AU RAPPORT DE RECHERCHE EUROPEENNE
## RELATIF A LA DEMANDE DE BREVET EUROPEEN NO.

**EP 23 19 0872**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**07−12−2023**

| Document brevet cité au rapport de recherche | Date de publication | Membre(s) de la famille de brevet(s) | Date de publication |
|---|---|---|---|
| | | JP 2012111953 A | 14−06−2012 |
| | | JP 2014159570 A | 04−09−2014 |
| | | JP 2016121353 A | 07−07−2016 |
| | | JP 2017186563 A | 12−10−2017 |
| | | JP 2018204031 A | 27−12−2018 |
| | | KR 20070007370 A | 15−01−2007 |
| | | KR 20120085936 A | 01−08−2012 |
| | | KR 20130023405 A | 07−03−2013 |
| | | LT 1743010 T | 10−10−2016 |
| | | PL 1743010 T3 | 28−04−2017 |
| | | TW 200613537 A | 01−05−2006 |
| | | US 2005241805 A1 | 03−11−2005 |
| | | US 2010127209 A1 | 27−05−2010 |
| | | US 2011289748 A1 | 01−12−2011 |
| | | US 2014107242 A1 | 17−04−2014 |
| | | US 2016340487 A1 | 24−11−2016 |
| | | US 2019144628 A1 | 16−05−2019 |
| | | WO 2005108523 A1 | 17−11−2005 |

EPO FORM P0460

Pour tout renseignement concernant cette annexe : voir Journal Officiel de l'Office européen des brevets, No.12/82